# EUROPEAN PATENT APPLICATION

(11) **EP 1 973 047 A1**
(43) Date of publication of application: **24.09.2008**
(21) Application number: 08152896.0
(22) Date of filing: 18.03.2008
(51) Int. Cl.: G06F 17/30

(54) **Information retrieval system and information retrieval method**

(30) Priority: 19.03.2007 JP 2007071609
(71) Applicant: Ricoh Company, Ltd., Tokyo 143-8555 (JP)
(72) Inventor: Kanaya, Mitsuhisa, Tokyo (JP)
(74) Representative: Schwabe - Sandmair - Marx

(57) **Abstract**

An information retrieval system includes a a database which holds information items arranged in a hierarchical data structure. An information retrieval device outputs a search result from the database in response to a goodness of fit computed for each of the information items to search criteria. An input unit inputs hierarchy information indicating a hierarchy to which priority is given for outputting of a corresponding search result. A goodness-of-fit change unit assigns a bias value to a goodness of fit computed for each of information items from among the information items held in the database, which are arranged at the hierarchy indicated by the hierarchy information inputted by the input unit, to change the goodness of fit.

## Description

### BACKGROUND OF THE INVENTION

### 1. Field of the Invention

This invention relates to an information retrieval system and an information retrieval method.

### 2. Description of the Related Art

In recent years, with the spread of information technology (IT) systems, one of important issues of information retrieval systems is how required information be retrieved from various information items efficiently. For example, how to search a required page from among Web pages on the Internet, and how to search a required document from among a variety of documents stored in a document management system are important.

One of the problems common to the above examples is that as the number of the information items (Web pages and documents) used as a retrieval object increases, the number of information items which match search criteria increases and the number of search results also increases, and thus discovering the required information that a searching operator wants to really find becomes difficult.

There is an information retrieval method which aims at solving the above-mentioned problem, in which a goodness of fit which indicates the degree of goodness of fit is computed with respect to each of the information items which match the search criteria, and a list of the information items sorted in descending order of the goodness of fit is presented to the searching operator.

For example, as disclosed in Japanese Laid-Open Patent Application Nos. 2003-186901 and 2003-186912, the information retrieval method of this kind is applied to searching of Web pages, and a relatively high goodness of fit is assigned to a Web page which is located close (located at a shallow hierarchy) to the representation page (top page) of the site to which the page belongs. Namely, Japanese Laid-Open Patent Application Nos. 2003-186901 and 2003-186912 disclose an information retrieval method in which a relatively high goodness of fit is assigned to a Web page located near the root information (representation page) of the tree structured information items.

Japanese Laid-Open Patent Application No. 2000-222436 discloses an information retrieval method in which a database selection menu is created by using a number of hierarchical structured information items on an ontological tree. Ontology is a data structure created by a system administrator of an information retrieval system or the like, and this data structure is constituted by a set of tree-structured information concepts arrayed from higher degrees of abstraction to lower degrees of abstraction.

Japanese Laid-Open Patent Application No. 10-177584 discloses a document retrieval system in which attribute values of respective information items used as the retrieval object are arrayed beforehand in a tree structure (hierarchy), and search criteria are generated by using the tree structure.

According to the method disclosed in Japanese Laid-Open Patent Application Nos. 2003-186901 and 2003-186912, in searching of Web pages, a relatively high goodness of fit is assigned to a Web page located near the root information (representation page) of the tree structured information items. However, it is conceivable that a searching operator generally wants the information items located at various depths of the tree structure. The method disclosed in Japanese Laid-Open Patent Application Nos. 2003-186901 and 2003-186912 has a problem that it is difficult to retrieve required information with a high level of precision when the required information items to be retrieved are located at various depths of the tree structure.

### SUMMARY OF THE INVENTION

According to one aspect of the invention, there is disclosed an improved information retrieval system and method in which the above-described problems are eliminated.

According to one aspect of the invention there is disclosed an information retrieval system and method which is capable of retrieving required information with a high level of precision.

In an embodiment of the invention which solves or reduces one or more of the above-mentioned problems, there is disclosed an information retrieval system which comprises: a database holding information items arranged in a hierarchical data structure; an information retrieval device outputting a search result from the database in response to a goodness of fit computed for each of the information items to search criteria; an input unit inputting hierarchy information indicating a hierarchy to which priority is given for outputting of a corresponding search result; and a goodness-of-fit change unit assigning a bias value to a goodness of fit computed for each of information items from among the information items held in the database, which are arranged at the hierarchy indicated by the hierarchy information inputted by the input unit, to change the goodness of fit.

The above-mentioned information retrieval system may be configured so that the goodness-of-fit change unit is arranged to change a goodness of fit computed for an information item in the database such that the farther a position of a hierarchy to which the information item belongs from a position of the hierarchy inputted by the input unit is, the smaller a bias value assigned to the goodness of fit is.

The above-mentioned information retrieval system may be configured so that the input unit is arranged to input an information item from among the information items held in the database, as search criteria, and the goodness-of-fit change unit is arranged to assign a bias value to a goodness of fit computed for each of information items from among the information items held in the database, which are arranged at a hierarchy to which the information item inputted by the input unit belongs, to change the goodness of fit.

The above-mentioned information retrieval system may be configured so that the goodness-of-fit change unit is arranged to change a goodness of fit computed for an information item in the database such that the farther a position of a hierarchy to which the information item belongs from a position of the hierarchy to which the information item inputted by the input unit belongs is, the smaller a bias value assigned to the goodness of fit is.

In an embodiment of the invention which solves or reduces one or more of the above-mentioned problems, there is disclosed an information retrieval method for use in an information retrieval system including a database which holds information items arranged in a hierarchical data structure, and an information retrieval device which outputs a search result from the database in response to a goodness of fit computed for each of the information items to search criteria, the method comprising steps of: inputting hierarchy information indicating a hierarchy to which priority is given for outputting of a corresponding search result; and assigning a bias value to a goodness of fit computed for each of information items from among the information items held in the database, which are arranged at the hierarchy indicated by the inputted hierarchy information, to change the goodness of fit.

The above-mentioned information retrieval method may be configured so that the inputting step is arranged to input an information item from among the information items held in the database, as search criteria, and the assigning step is arranged to assign a bias value to a goodness of fit computed for each of information items from among the information items held in the database, which are arranged at a hierarchy to which the inputted information item belongs, to change the goodness of fit.

According to the embodiments of the information retrieval system and method of the invention, it is possible to retrieve required information with a high level of precision.

### BRIEF DESCRIPTION OF THE DRAWINGS

Other objects, features and advantages of the present invention will be apparent from the following detailed description when reading in conjunction with the accompanying drawings.

FIG. 1 is a diagram showing an example of tree-structured information items used as the retrieval object of an information retrieval method according to the related art.

FIG. 2 is a diagram showing an example of the information retrieval result based on the information retrieval method according to the related art.

FIG. 3 is a block diagram showing the outline composition of an information retrieval system in an embodiment of the invention.

FIG. 4 is a flowchart for explaining operation of an information retrieval method used by the information retrieval system of this embodiment.

FIG. 5A is a diagram showing an example of the information retrieval result based on the information retrieval method of this embodiment.

FIG. 5B is a diagram showing an example of the information retrieval result based on the information retrieval method of this embodiment.

FIG. 6 is a diagram for explaining an example of the information retrieval based on the information retrieval method of this embodiment.

### DETAILED DESCRIPTION OF PREFERRED EMBODIMENTS

Before describing embodiments of the invention with reference to the accompanying drawings, a description will now be given of the problem being solved by the invention, for the sake of facilitating understanding of the principle of the invention.

In the previously mentioned information retrieval method according to the related art, a goodness of fit is computed for each of information items which match search criteria, such as a keyword retrieval, and a list of the information items sorted in descending order of the computed goodness of fit is presented to a searching operator.

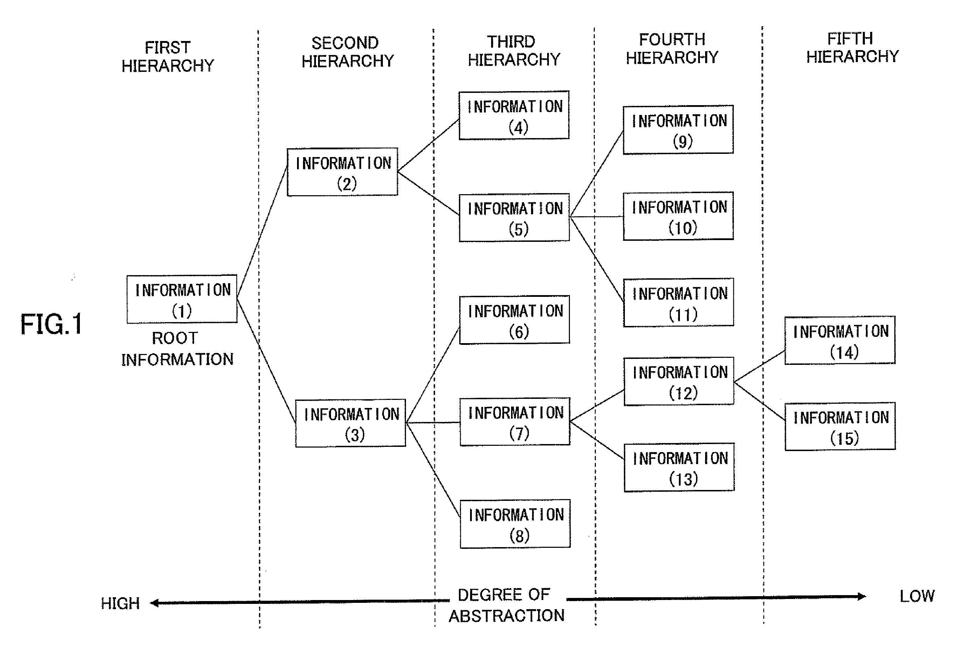

Suppose that an example of tree-structured information items (which are arranged in a hierarchical data structure) as shown in FIG. 1 is used as the retrieval object of the information retrieval method according to the related art. Typical examples of the information items used as the retrieval object may be Web pages or document information which is managed by a document-management device.

Each of the information items shown in FIG. 1 is located at one of nodes (hierarchy) of the tree structure. For the sake of convenience of description, in the following, a position of the node of route information in the tree structure will be called the 1st hierarchy, and positions of the nodes of other information items will be called the 2nd hierarchy, the 3rd hierarchy, the 4th hierarchy, etc., as the depth of the hierarchy increases.

Moreover, suppose that each of the information items shown in FIG. 1 is arranged so that as the depth of a hierarchy in the tree structure (or the ordinal number of a hierarchy) increases, the degree of abstraction of the corresponding information items decreases (or changes from a high degree of abstraction to a low degree of abstraction). The degree of abstraction of information may be defined as follows. For example, when a set of information items arranged in a hierarchical data structure is managed in the name of a predetermined project, it can be said that information items located in shallow hierarchies, such as a project name, have a high degree of abstraction, while information items located in deep hierarchies, such as data concerning one of tasks into which the project is subdivided, have a low degree of abstraction (or a high degree of concreteness).

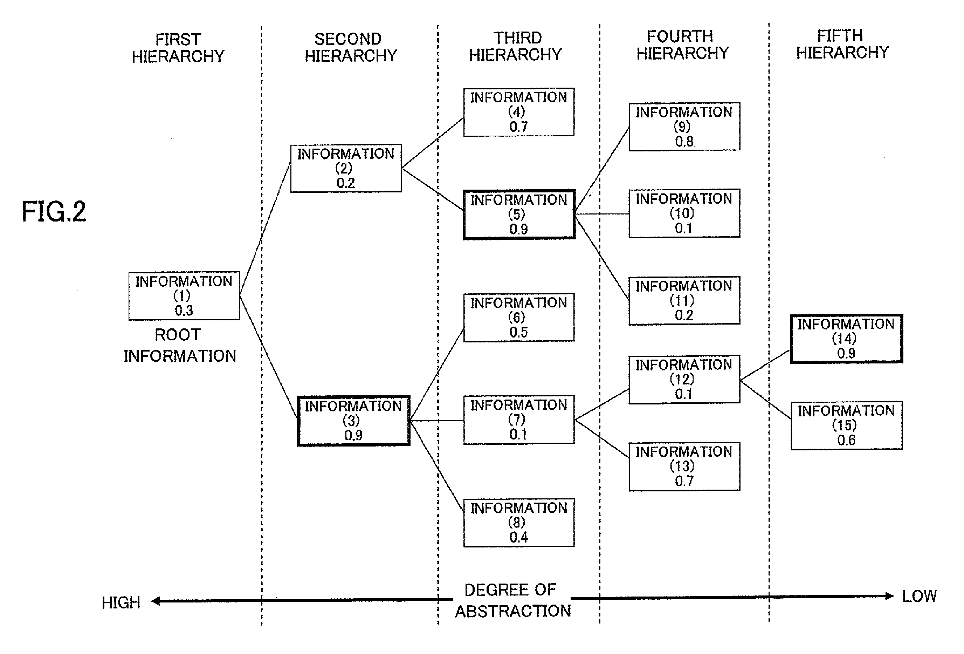

It is assumed that the result of computation of the goodness of fit for each of the information items of FIG. 1 which match the search criteria is as shown in FIG. 2. FIG. 2 shows an example of the information retrieval result based on the information retrieval method according to the related art. Among the information items used as the retrieval object, the goodness of fit of the information items (3), (5), and (14) is equal to 0.9 and it is the highest value as shown in FIG. 2.

However, a problem arises in what sequence the information items (3), (5), and (14) should be arranged for the presentation to a searching operator or a user. A searching operator generally seeks the information items which are located at various depths of the tree structure. Namely, in some cases, it may be preferred that the information item (3) located in the 2nd hierarchy be presented preferentially to the searching operator, and, in other cases, it may be preferred that the information item (5) or (14) located in the 3rd hierarchy or the 5th hierarchy be presented preferentially to the searching operator.

In order to solve the above-mentioned problem, the following embodiments of the invention provide an information retrieval system and method in which a degree of abstraction (or hierarchy information) of each of information items which are sought by the searching operator is known beforehand, and retrieving the required information with a high level of precision is enabled by combining the known degree of abstraction (or hierarchy information) with the search criteria and computing each goodness of fit.

A description will be given of the embodiments of the invention with reference to the accompanying drawings.

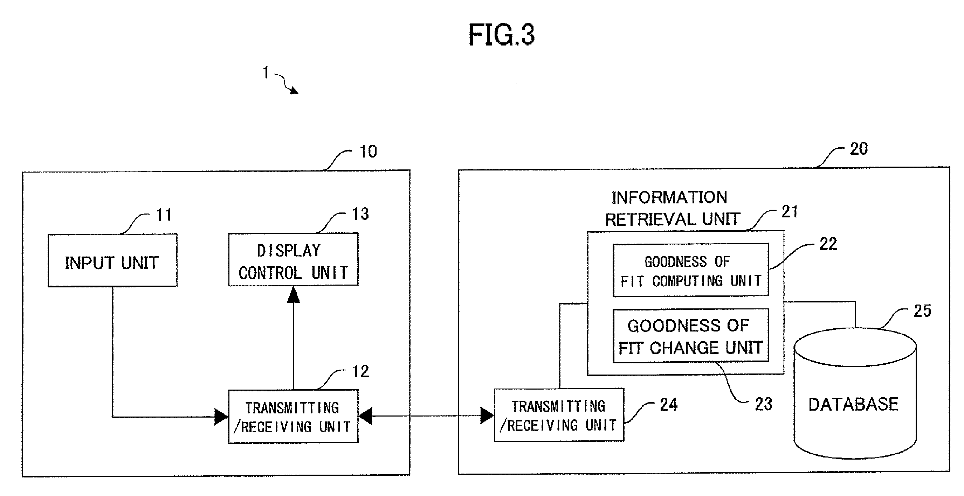

The composition of an information retrieval system in an embodiment of the invention will be explained with reference to FIG. 3. FIG. 3 shows the composition of an information retrieval system in an embodiment of the invention.

As shown in FIG. 3, the information retrieval system 1 of this is constituted by an information retrieval device 10 and a data server 20. The information retrieval device 10 includes an input unit 11, a transmitting/receiving unit 12, and a display control unit 13. The data server 20 includes an information retrieval unit 21, a transmitting/receiving unit 24, and a database 25.

The information retrieval device 10 is, for example, a PC (personal computer) which transmits an information retrieval request to the data server 20 which will be described later. The information retrieval device 10 includes a CPU (central processing unit), an ROM (read-only memory), an RAM (random access memory), etc. which are not illustrated.

The input unit 11 inputs instructions from a searching operator or a user, such as search criteria. The input unit 11 is, for example, a keyboard, and a search keyword from the searching operator is inputted via the keyboard as the search criteria.

The transmission and reception unit 12 is an interface device which transmits information, including the inputted search criteria from the input unit 11, to and receives information from the data server 20. The display control unit 13 controls the contents of a display indication displayed on a display unit which is not illustrated. For example, the contents of the display indication are generated by the display control unit 13 based on the information received from the data server 20 via the transmitting/receiving unit 12. The display control unit 13 may be arranged integrally with the information retrieval device 10, or may be arranged in an external device separate from the information retrieval device 10.

The data server 20 is a server device in which the information items used as the retrieval object of the information retrieval device 10 are stored. The data server 20 includes a CPU, an ROM, an RAM, etc. which are not illustrated.

The information retrieval unit 21 retrieves required information from the database 25 (which will be described below). The information retrieval unit 21 includes a goodness-of-fit computing unit 22, and this goodness-of-fit computing unit 22 computes a goodness of fit for each of the information items stored in the database 25, based on the information concerning the search criteria received from the information retrieval device 10 by the transmitting/receiving unit 24 (which will be described below).

The information retrieval unit 21 includes a goodness-of-fit change unit (bias value assignment unit) 23 which assigns a bias value to a goodness of fit computed for each of the information items to the search criteria, to change the goodness of fit. The information retrieval unit 21 retrieves the required information by using the goodness-of-fit change unit 23. The transmitting/receiving unit 24 is an interface device which transmits the information retrieved from the database 25 by the information retrieval unit 21, to the information retrieval device 10 and receives information from the information retrieval device 10. The database 25 is a storage device which stores the information items used as the retrieval object of the information retrieval device 10.

The database 25 may be arranged integrally with the data server 20 or may be arranged in another computer which is separate from the data server 20 and connected via a network, such as the Internet.

In the information retrieval system 1 of this embodiment described above, the information retrieval device 10 transmits the instructions including search criteria to the data server 20 based on the search criteria inputted by the user using the input unit 11. The data server 20 retrieves required information from the information items stored in the database 25. The retrieval result is transmitted from the data server 20 to the information retrieval device 10, and a display indication indicating the retrieval result is displayed on the display unit (which is not illustrated) by the display control unit 13.

The information retrieval method used by the information retrieval system 1 of this embodiment is primarily realized by using the goodness-of-fit computing unit 22 and the goodness-of-fit change unit 23 of the information retrieval unit 21. However, the present invention is not limited to this embodiment in which these functions are arranged on the data server 20 as shown in FIG. 3. Alternatively, the goodness-of-fit computing unit 22 and the goodness-of-fit change unit 23 may be arranged on another device which is different from the data server 20, such as the information retrieval device 10.

Alternatively, an integrated device having the functions of both the information retrieval device 10 and the data server 20 may also be called the information retrieval device according to the invention.

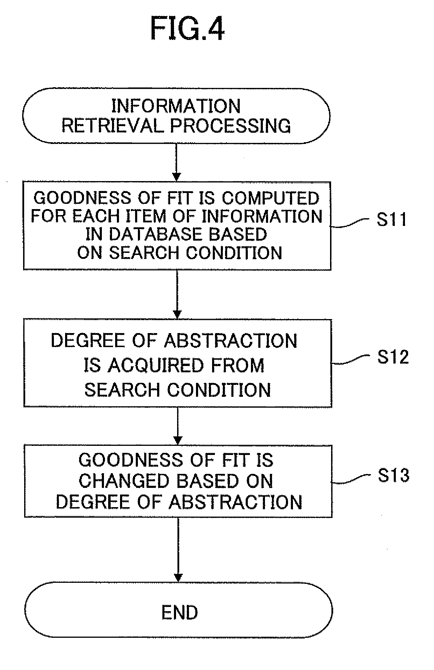

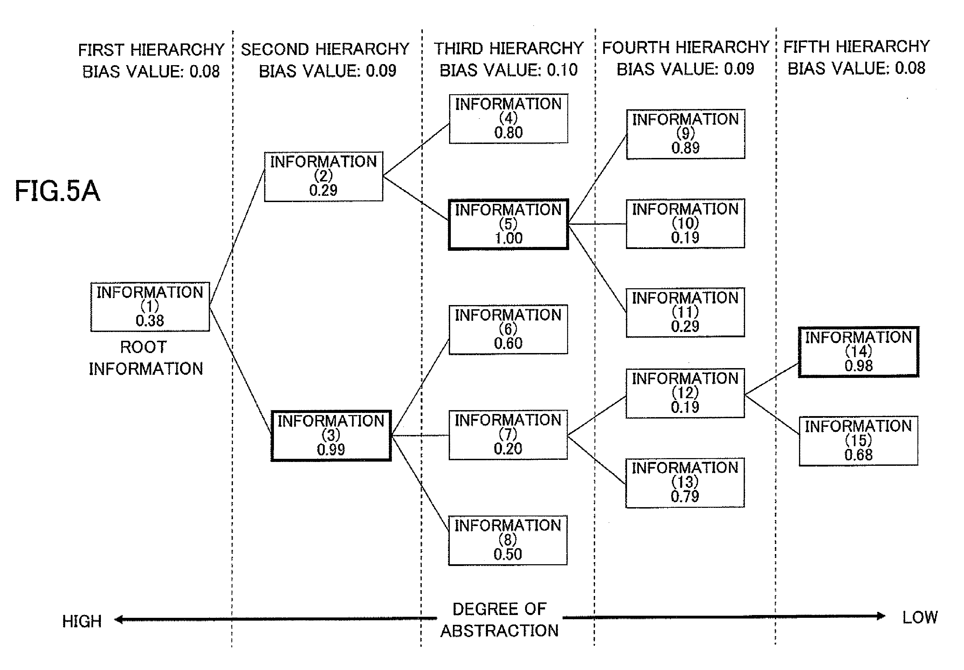

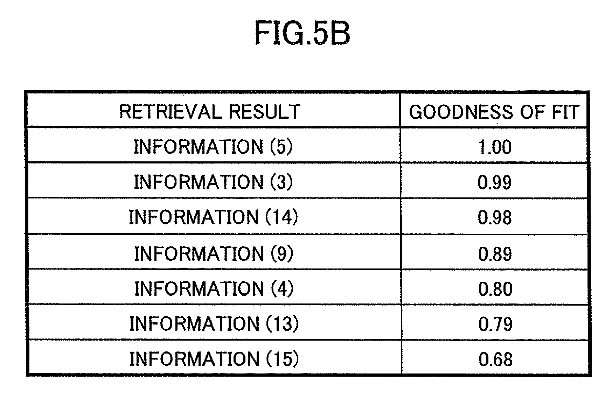

Next, a description will be given of the outline of the information retrieval method in an embodiment of the invention with reference to FIG. 4, FIG. 5A and FIG. 5B.

FIG. 4 is a flowchart for explaining operation of the information retrieval method used by the information retrieval system of this embodiment. FIG. 5A is a diagram showing an example of the information retrieval result based on the information retrieval method of this embodiment. FIG. 5B is a diagram showing an example of the information retrieval result based on the information retrieval method of this embodiment.

Hereinafter, the information retrieval processing which is performed by the information retrieval method of this embodiment with respect to the tree-structured information items shown in FIG. 1 and used as the retrieval object will be explained.

Supposing that a degree of abstraction (in this example, hierarchy information) indicating a hierarchy in the tree structure to which priority is given for outputting of a corresponding search result by the searching operator is known beforehand, in the information retrieval processing performed by the information retrieval method of this embodiment, the known degree of abstraction (or hierarchy information) is combined with the search criteria, and a goodness of fit is computed for each of the information items in the database.

Suppose that the search criteria and the hierarchy information (in this example, the 3rd hierarchy) that indicates the hierarchy in the tree structure to which priority is given for outputting of a corresponding search result are inputted beforehand by the user using the input unit 11, and that the search criteria are already transmitted to the transmitting/receiving unit 24 of the data server 20 by the transmitting/receiving unit 12.

In the processing of the information retrieval method of this embodiment, the information retrieval unit 21 is caused to retrieve required information from the database 25 based on the search criteria and the hierarchy information.

Upon start of the information retrieval processing of FIG. 4, the goodness-of-fit computing unit 22 computes a goodness of fit for each of the information items held in the database 25 based on the search criteria received by the transmitting/receiving unit 24 (S11). At this time, a goodness of fit is computed for each of the information items which match the search criteria. The result of the computation at step S11 will be similar to the example shown in FIG. 2 which is obtained through the information retrieval method according to the related art.

Progressing to step S12, the goodness-of-fit computing unit 22 acquires the degree of abstraction from the search criteria received by the transmitting/receiving unit 24 (S12). The degree of abstraction from the search criteria means the depth of the information (distance from the route information) in the tree structure as shown in the example of FIG. 1, which the searching operator (or the user of the information retrieval device 10) seeks to retrieve.

For example, if the degree of abstraction of the information which is sought by the searching operator is high, then the 1st hierarchy is acquired as the degree of abstraction from the search criteria (or the required information has a high degree of abstraction). If the information in a middle degree of abstraction is sought, then the 3rd hierarchy is acquired as the degree of abstraction from the search criteria (or the required information has a middle degree of abstraction). If the degree of abstraction of the information sought is low, then the 5th hierarchy is acquired as the degree of abstraction from the search criteria (or the required information has a low degree of abstraction).

In the present embodiment, it is assumed that the 3rd hierarchy is acquired as the degree of abstraction from the search criteria, which is the hierarchy information indicating the hierarchy in the tree structure to which priority is given for outputting of a corresponding search result.

Progressing to step S13, the goodness-of-fit change unit 23 assigns a bias value based on the degree of abstraction acquired from the search criteria in the step S12, to change the computed goodness of fit (S13).

Since the 3rd hierarchy is acquired as the degree of abstraction from the search criteria in the step S12, a bias value is assigned to the computed goodness of fit for each of information items belonging to the 3rd hierarchy, so that a relatively high goodness of fit may be assigned to each of information items belonging to the 3rd hierarchy (the required information has a middle degree of abstraction).

Specifically, as in the example of FIG. 5A, 0.10 is assigned as a bias value to the computed goodness of fit for each of the information items belonging to the 3rd hierarchy. Subsequently, 0.09 (a value smaller than the bias value assigned for the information items belonging to the 3rd hierarchy) is assigned as a bias value to the computed goodness of fit for each of the information items belonging to the 2nd and 4 hierarchies which are hierarchies next to the 3rd hierarchy. Similarly, 0.08 is assigned as a bias value to the computed goodness of fit for each of the information items belonging to the 1st and 5th hierarchies. Consequently, the information retrieval result is as shown in FIG. 5A.

In this manner, the information retrieval processing is performed by the information retrieval method of this embodiment with respect to the tree-structured information items shown in FIG. 1 as the retrieval object.

The information retrieval result as shown in FIG. 5A is transmitted to the information retrieval device 10 via the transmitting/receiving unit 24. The information retrieval device 10 receives the information retrieval results via the transmitting/receiving unit 12, and the display control unit 13 displays, on the display unit (not illustrated), the information retrieval result, such as a list of the information items sorted in descending order of the changed goodness of fit shown in FIG. 5B.

By using the information retrieval method of this embodiment described above, the required information can be retrieved with a high level of precision, and it is possible to obtain the retrieval result reflecting the searching operator's intention of retrieval as shown in FIG. 5B.

As is apparent from the above-described step S13, the goodness-of-fit change unit 23 may be arranged to change a goodness of fit computed for an information item in the database 25 such that the farther a position of a hierarchy to which the information item belongs from a position of the hierarchy (or the 3rd hierarchy) inputted by the input unit 11 is, the smaller a bias value assigned to the goodness of fit is. It is possible to retrieve the required information with a high level of precision according to the purpose of retrieval.

In the above-described step S12, the goodness-of-fit computing unit 22 acquires the degree of abstraction from the search criteria received by the transmitting/receiving unit 24. As is clearly mentioned above, the degree of abstraction acquired from the search criteria in this step is the same as the hierarchy information which is inputted by the user using the input unit 11. However, the present invention is not limited to this embodiment. Alternatively, the information retrieval device 10 or the data server 20 may generate automatically the hierarchy information which indicates the hierarchy in the tree structure to which priority is given for outputting of a corresponding search result (priority display).

For example, when retrieving the related information relevant to information items stored at a predetermined hierarchy in the database 25, the information retrieval system of this embodiment may perform the information retrieval processing as follows. First, one of the information items stored at the predetermined hierarchy in the database 25 is inputted by the user using the input unit of the information retrieval device 10. Then, the data server 20 receives the inputted information item through the transmitting/receiving unit 24. Based on the inputted information item, the goodness-of-fit computing unit 22 acquires, as the hierarchy information (indicating a hierarchy to which priority is given for outputting of a corresponding result), information items from among the information items held in the database, which are arranged at a hierarchy to which the inputted information item belongs, and the goodness-of-fit computing unit 22 computes a goodness of fit for each of the acquired information items. The goodness-of-fit change unit 23 assigns a bias value to each computed goodness of fit to change the goodness of fit in a similar manner.

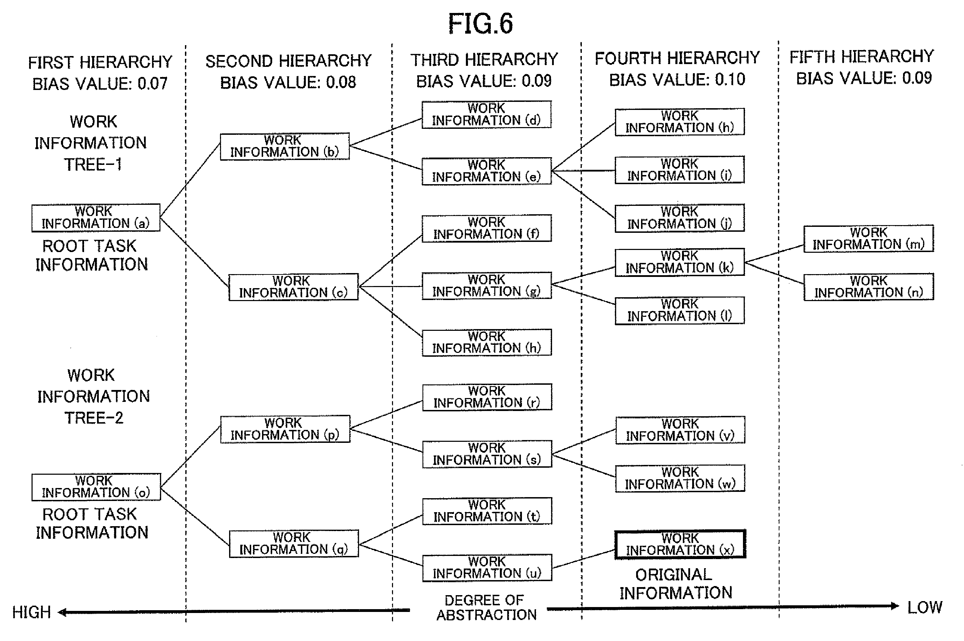

Next, an example of the information retrieval based on the information retrieval method of this embodiment will be explained with reference to FIG. 6. FIG. 6 is a diagram for explaining an example of the information retrieval based on the information retrieval method of this embodiment.

In this example, the information retrieval processing is performed by the information retrieval method of this embodiment with respect to the tree structured information items shown in FIG. 6 which are used as the retrieval object.

Suppose that what is held beforehand in the database 25 includes a work information item (task) with a high degree of abstraction arranged at the 1st hierarchy (root) in the tree structure, and work information items (subtasks) with low degrees of abstraction (into which the work information at the higher-rank hierarchy is divided) arranged at the 2nd hierarchy, the 3rd hierarchy, the 4th hierarchy, and the 5th hierarchy, etc. in the tree structure as shown in FIG. 6.

Specifically, as shown in FIG. 6, what is held in the database 25 includes: the work information which is divided into work information trees 1 and 2 as root task information arranged at the 1st hierarchy, which are referred to as work information item (a) and work information item (o), respectively; and the work information items (b)-(n) and (p)-(x) arranged at the 2nd hierarchy, the 3rd hierarchy, the 4th hierarchy, and the 5th hierarchy, respectively.

Moreover, suppose that instructions for retrieving the related information relevant to the work information item (x) located at the 4th hierarchy in the work information tree 2 are inputted beforehand as search criteria by the user using the input unit 11, and that the search criteria are transmitted beforehand to the transmitting/receiving unit 24 of the data server 20 by the transmitting/receiving unit 12.

At this time, the information retrieval method of this embodiment causes the information retrieval unit 21 to perform the information retrieval processing which retrieves the related information relevant to the work information item (x) from the work information tree 1 of the database 25 based on the search criteria. A description will be now given of the information retrieval processing of this example with reference to FIG. 4.

Upon start of the information retrieval processing, the goodness-of-fit computing unit 22 retrieves the related information from the database 25 based on the search criteria received by the transmitting/receiving unit 24, and computes a goodness of fit for each of the information items which meet the search criteria (S11).

In the information retrieval system of this embodiment, the goodness-of-fit computing unit 22 performs attribute retrieval and keyword retrieval based on the bibliographic attribute information of the work information item (x) and the keywords acquired from the descriptive content of the work information item (x), and compute a goodness of fit (a degree of similarity) based on each of the retrieval results.

Progressing to step S12, the goodness-of-fit computing unit 22 acquires the degree of abstraction from the search criteria received by the transmitting/receiving unit 24 (S12). Since the related information which is relevant to the work information item (x) held at the 4th hierarchy in the database 25 is retrieved in this example, the 4th hierarchy is acquired from the search criteria as the degree of abstraction.

Progressing to step S13, the goodness-of-fit change unit 23 assigns a bias value to a goodness of fit computed for each of the related information items based on the degree of abstraction acquired from the search criteria in the step S12, to change the goodness of fit (S13). Since the degree of abstraction acquired from the search criteria in the step S12 is the 4th hierarchy, a bias value is assigned to a goodness of fit computed for each of information items belonging to the 4th hierarchy so that a relatively high goodness of fit may be obtained.

Specifically, as in the example of FIG. 6, 0.10 is assigned as a bias value to the computed goodness of fit for each of the information items belonging to the 4th hierarchy. Subsequently, 0.09 (a value smaller than the bias value assigned for the information items belonging to the 4th hierarchy) is assigned as a bias value to the computed goodness of fit for each of the information items belonging to the 3rd and 5 hierarchies which are hierarchies next to the 4th hierarchy. Similarly, 0.08 is assigned as a bias value to the computed goodness of fit for each of the information items belonging to the 2nd and 6th hierarchies. Consequently, the bias values are assigned as shown in FIG. 6.

In this manner, the information retrieval processing is performed by the information retrieval method of this embodiment with respect to the tree-structured information items shown in FIG. 6 as the retrieval object. Thereby, the searching operator can retrieve the related information relevant to the work information item (x) contained in the work information tree 2 in which the work information item (o) is set to the root task information, from among the work information items contained in the work information tree 1 in which the work information item (a) is set to the root task information.

Moreover, the related information which is similar in not only the attribute information and the descriptive content but also in the degree of abstraction can be retrieved, and a list of the corresponding search results sorted in descending order of the changed goodness of fit can be presented to the searching operator.

In addition, if necessary, normalization processing may be performed with respect to a certain type of tree-structured information items used as the retrieval object of the information retrieval system and method of invention, i.e., Web pages and document information managed by a document-management device. Thereby, the degree of abstraction of information may be normalized through the normalization processing.

For example, suppose that a set of information items contains two tree structures A and B, and the tree structure A has three hierarchies and the tree structure B has five hierarchies. When the degree of abstraction of the information located at the 3rd hierarchy in the tree structure A is the same as that of the information located at the 5th hierarchy in the tree structure B, the degree of abstraction of information of the tree structure A can match with that of information of the tree structure B by performing the normalization processing with respect to the information of the tree structure A.

As described in the foregoing, in this invention, the depth in the tree structure (the distance from the route information) is regarded as a degree of abstraction, and as the depth increases, the degree of abstraction of information falls (or the degree of concreteness increases). Accordingly, by assigning a relatively high goodness of fit to an information item which matches the degree of abstraction (tree depth) contained in the search criteria, it is possible to realize an information retrieval device which more easily retrieves the required information sought by a searching operator with a high level of precision.

## Claims

1. An information retrieval system comprising:
a database holding information items arranged in a hierarchical data structure;
an information retrieval device outputting a search result from the database in response to a goodness of fit computed for each of the information items to search criteria;
an input unit inputting hierarchy information indicating a hierarchy to which priority is given for outputting of a corresponding search result; and
a goodness-of-fit change unit assigning a bias value to a goodness of fit computed for each of information items from among the information items held in the database, which are arranged at the hierarchy indicated by the hierarchy information inputted by the input unit, to change the goodness of fit.

2. The information retrieval system according to claim 1, wherein the goodness-of-fit change unit is arranged to change a goodness of fit computed for an information item in the database such that the farther a position of a hierarchy to which the information item belongs from a position of the hierarchy inputted by the input unit is, the smaller a bias value assigned to the goodness of fit is.

3. An information retrieval system comprising:
a database holding information items arranged in a hierarchical data structure;
an information retrieval device outputting a search result from the database in response to a goodness of fit computed for each of the information items to search criteria;
an input unit inputting an information item among the information items held in the database, as search criteria; and
a goodness-of-fit change unit assigning a bias value to a goodness of fit computed for each of information items from among the information items held in the database, which are arranged at a hierarchy to which the information item inputted by the input unit belongs, to change the goodness of fit.

4. The information retrieval system according to claim 3, wherein the goodness-of-fit change unit is arranged to change a goodness of fit computed for an information item in the database such that the farther a position of a hierarchy to which the information item belongs from a position of the hierarchy to which the information item inputted by the input unit belongs is, the smaller a bias value assigned to the goodness of fit is.

5. An information retrieval method for use in an information retrieval system including a database which holds information items arranged in a hierarchical data structure, and an information retrieval device which outputs a search result from the database in response to a goodness of fit computed for each of the information items to search criteria, the method comprising:
inputting hierarchy information indicating a hierarchy to which priority is given for outputting of a corresponding search result; and
assigning a bias value to a goodness of fit computed for each of information items from among the information items held in the database, which are arranged at the hierarchy indicated by the inputted hierarchy information, to change the goodness of fit.

6. An information retrieval method for use in an information retrieval system including a database which holds information items arranged in a hierarchical data structure, and an information retrieval device which outputs a search result from the database in response to a goodness of fit computed for each of the information items to search criteria, the method comprising:
inputting an information item among the information items held in the database, as search criteria; and
assigning a bias value to a goodness of fit computed for each of information items from among the information items held in the database, which are arranged at a hierarchy to which the inputted information item belongs, to change the goodness of fit.

## Amended claims

### Amended claims in accordance with Rule 137(2) EPC.

**1.** An information retrieval system (1) comprising:
a database (25) configured to hold information items arranged in a hierarchical data structure;
an information retrieval device (10) configured to output a search result from the database (25) in response to a goodness of fit computed for each of the information items to search criteria;
**characterized by**:
an input unit (11) configured to input hierarchy information indicating a hierarchy to which priority is given for outputting of a corresponding search result, wherein the hierarchy indicates a degree of abstraction of the information items; and
a goodness-of-fit change unit (23) configured to assign, based on the degree of abstraction from the search criteria, a bias value to the goodness of fit computed for each of information items from among the information items held in the database (25), which are arranged at the hierarchy indicated by the hierarchy information inputted by the input unit (11), to change the computed goodness of fit.

**2.** The system (1) according to claim 1, wherein the goodness-of-fit change unit (23) is arranged to change a goodness of fit computed for an information item in the database (25) such that the farther a position of a hierarchy to which the information item belongs from a position of the hierarchy inputted by the input unit (11) is, the smaller a bias value assigned to the goodness of fit is.

**3.** The system (1) according to claim 1 or 2, wherein
the input unit (11) inputting an information item among the information items held in the database (25), as search criteria.

**4.** The system (1) according to any one of claims 1 to 3, where the information retrieval device (10) comprises a display control unit (13) configured to control the displaying of the information retrieval result on a display unit.

**5.** The system (1) according to any one of claims 1 to 4, wherein the system (1) further comprises a data server (20) comprising the database (25).

**6.** The system (1) according to any one of claims 1 to 5, wherein the information retrieval device (10) is connected to the data server (20) via a transmitting/receiving unit (12, 24).

**7.** An information retrieval method for use in an information retrieval system (1) including a database (25) which holds information items arranged in a hierarchical data structure, and an information retrieval device (10) which outputs a search result from the database (25) in response to a goodness of fit computed for each of the information items to search criteria;
**characterized by**:
the method comprises the following steps:
inputting hierarchy information indicating a hierarchy to which priority is given for outputting of a corresponding search result, wherein the hierarchy indicates a degree of abstraction of the information items; and
assigning, based on the degree of abstraction from the search criteria, a bias value to a goodness of fit computed for each of information items from among the information items held in the database (25), which are arranged at the hierarchy indicated by the inputted hierarchy information, to change the goodness of fit.

**8.** The method according to claim 7, wherein the method further comprises the following step:
inputting an information item among the information items held in the database (25), as search criteria.
